(19) Europäisches Patentamt
European Patent Office
Office européen des brevets

(11) EP 2 030 997 B1

(12) **EUROPEAN PATENT SPECIFICATION**

(45) Date of publication and mention of the grant of the patent:
**30.10.2013 Bulletin 2013/44**

(21) Application number: **06745468.6**

(22) Date of filing: **19.04.2006**

(51) Int Cl.:
***C08F 216/06*** (2006.01) ***C08J 5/18*** (2006.01)
***D21H 21/16*** (2006.01) ***D21H 17/36*** (2006.01)
***B01F 17/52*** (2006.01) ***C09J 129/04*** (2006.01)
***C09D 129/04*** (2006.01)

(86) International application number:
**PCT/JP2006/308236**

(87) International publication number:
**WO 2007/122706 (01.11.2007 Gazette 2007/44)**

(54) **POLYVINYL ALCOHOL RESIN AND USE THEREOF**

POLYVINYLALKOHOLHARZ UND VERWENDUNG DAVON

RÉSINE D'ALCOOL POLYVINYLIQUE ET SON UTILISATION

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**04.03.2009 Bulletin 2009/10**

(73) Proprietor: **The Nippon Synthetic Chemical Industry Co., Ltd.**
**Osaka 530-0018 (JP)**

(72) Inventors:
- **SHIBUTANI, Mitsuo**
**Osaka-shi, Osaka 530-0018 (JP)**
- **YUNO, Shinji**
**Osaka-shi, Osaka 530-0018 (JP)**

(74) Representative: **Kuhnen & Wacker**
**Patent- und Rechtsanwaltsbüro**
**Prinz-Ludwig-Straße 40A**
**85354 Freising (DE)**

(56) References cited:
**JP-A- 02 225 506** **JP-A- 11 236 417**
**JP-A- 2001 019 720** **US-A- 2 541 126**

- **"Polymeric materials encyclopedia" 1996, CRC Press , Boca Raton , XP002553002 ISBN: 084932470X vol. 9, , pages 6991-7013 * the whole document ***
- **Mark,Bikales,Overberger, Menges: "Encyclopedia of polymer science and engineering" 1989, John Wiley & Sons , New York , XP002553003 ISBN: 0471811815 vol. 17, , pages 181-186 * the whole document ***

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 030 997 B1

**Description**

Technical Field

The present invention relates to a novel polyvinyl alcohol-based resin having a carboxyl group-containing long-chain alkyl group on a side chain and use thereof. More particularly, it relates to a polyvinyl alcohol-based resin excellent in viscosity stability of an aqueous solution, high-speed coatability, reactivity with a crosslinking agent and water solubility when formed into a film and further capable of controlling these characteristics by pH, and use thereof.

Background Art

Polyvinyl alcohol-based resins (polyvinyl alcohol is hereinafter referred to as PVA for brevity) have hitherto been widely used for a dispersant, sn emulsifier, a suspending agent, a fiber processing agent, s paper processing agent, a binder, sn adhesive, a film and the like by utilizing their excellent water solubility, interface characteristic, film characteristic (such as film forming property, strength and oil resistance) and the like.
For such PVA-based resins, modification according to their use purpose has been tried, and modified PVA in which various functional groups are introduced into a side chain by copolymerization have been placed on a market. Above all, modified PVA in which a carboxyl group is introduced into a side chains has been widely used as a fiber processing agent and paper processing agent. This carboxyl group-modified PVA is produced by copolymerizing an ethylenically unsaturated carboxylic acid such as acrylic acid, maleic acid or itaconic acid with a vinyl ester compound, followed by saponification, and is excellent, compared to unmodified PVA, in water solubility, viscosity stability of an aqueous solution, flow characteristic under high shear rate and chelate forming ability with a metal ion, (for example, see non-patent document 1). It is known that when used as a paper processing agent, it efficiently remains on a surface by a reaction with aluminum sulfate in paper to obtain an excellent barrier property.
Non-Patent Document 1: POLYVINYL ALCOHOL-DEVELOPMENTS, edited by C. A. FINCH, p157, 1992
Further documents relate to specific PVA based polymers. As such, T. Yamamoto, et al. (cf. "Polymeric Materials Encyclopedia" 1996, CRC Press, vol. 9, pages 6991 ff.) and Mark, et al. (cf. "Encyclopedia of Polymer Science and Engineering" 1989, John Wiley & Sons, vol. 17, pages 181 ff.) relate to specific vinyl alcohol polymers and their methods of manufacturing. Further, the US 5 684 074 relates to copolymer compositions comprising a fluorine-containing copolymer, alkyl silicates, and polyoxytetra methylene glycol. The fluorine containing copolymer comprises vinyl containing compounds like a vinyl acetate. Even further, the FR 1 584 053 relates to a composition which is utilized as a hair lacquer, which composition comprise a copolymer which is constituted by a vinyl acetate structural unit and a pentenoic acid unit. Furthermore, the EP 0 440 435 A2 relates to a liquid developer for electrostatic photography. The liquid developer comprises a resin which is obtained by polymerizing a mono-functional monomer comprising either a methacrylate or a vinyl ether or an ethylenically unsaturated acid ester.

Disclosure of the Invention

Problems That the Invention Is to Solve

However, in the carboxyl group-modified PVA described in the above-mentioned non-patent document 1, the carboxyl group is liable to form a lactone ring by a reaction with an adjacent hydroxyl group or an ester exchange reaction with a residual acetic acid group, so that a part of the carboxyl group introduced by the copolymerization become inactive. Further, when a modification ratio is intended to be increased for improvement in its characteristics, there has been a fear of impairing water solubility which is an original characteristic of a PVA-based resin, because of a decrease in an amount of the hydroxyl groups similarly by forming the lactone ring, and of intermolecular crosslinking which is liable to occur particularly in the case of a low degree of saponification of a PVA-based resin. That is to say, it is a present situation that it has become impossible for such carboxyl group-modified PVA to respond to a request for increased surface strength or a decrease in the amount used, which has been demanded in paper processing use in recent years, and a modified PVA-based resin alternative to this has been required.

Means for Solving the Problems

Thus, the present inventors have made intensive studies in view of such circumstances. As a result, it has been found that a PVA-based resin according to claim 1 having a carboxyl group-containing long-chain alkyl group on a side chain conforms to the above-mentioned object, thereby completing the invention.
Such a PVA-based resin having a carboxyl group-containing long-chain alkyl group on a side chain is a PVA-based resin comprising a structural unit represented by the general formula (1):

[KA 1]

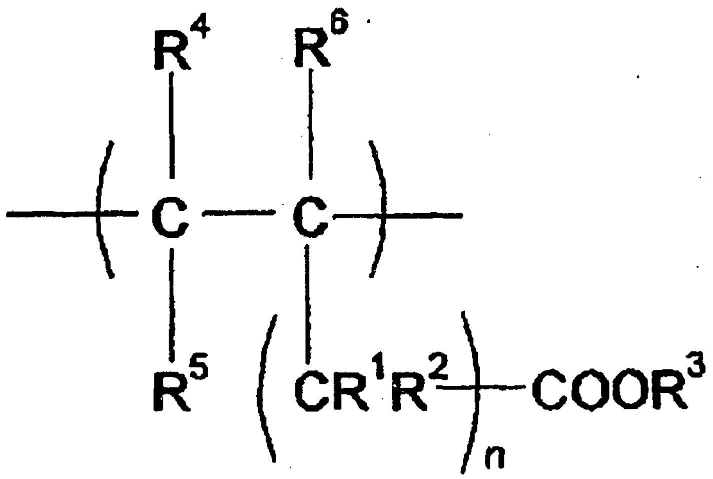

(1)

wherein $R^1$, $R^2$, $R^4$, $R^5$ and $R^6$ each independently represents a hydrogen atom or an alkyl group, $R^3$ represents a hydrogen atom, an alkyl group, an allyl group or an alkali metal, and n represents a positive integer.

That is to say, the invention is most characterized in that a PVA-based resin in which a carboxyl group is bonded to a main chain through a long-chain alkyl group having a certain degree of length is used, and advantages specific to the invention have been obtained by using such a PVA-based resin.

Advantages of the Invention

The PVA-based resin having a carboxyl group-containing long-chain alkyl group on a side chain of the invention is excellent in viscosity stability of an aqueous solution and high-speed coatability, and excellent in chelate forming ability with a metal ion by the carboxyl group and reactivity with various crosslinking agents, so that it is suitably used in a paper processing agent, a water-resistant coating agent (particularly, a protective layer resin for a heat-sensitive recording medium), an adhesives and the like. Further, it is excellent in solubility in water when formed into a formed article, particularly into a film, and is effective as a packaging water-soluble film for an agrochemical, a detergent, a cloth for washing, an additive for civil engineering, a disinfectant, a dye, a pigment and the like. Furthermore, the PVA-based resin becomes a hydrogel by association between hydrophobic groups of the long-chain alkyl groups by making the aqueous solution acidic, particularly deceasing the pH to 4 or less. In that case, an organic compound which is present as a mixture in the aqueous solution is incorporated into the gel, so that it is also possible to use as a separating/recovering agent for various organic compounds. In addition, the PVA-based resin of the invention is effective for various applications, particularly for applications such as an adhesive, an emulsifier, a suspending agent and a fiber processing agent by utilizing its characteristics.

Brief Description of the Drawings

[Fig. 1] Fig. 1 is an IR spectrum chart of PVA-based resin (I).
[Fig. 2] Fig. 2 is a $^1$H-NMR spectrum chart of PVA-based resin (I).
[Fig. 3] Fig. 3 is an IR spectrum chart of PVA-based resin (III).
[Fig. 4] Fig. 4 is a $^1$H-NMR spectrum chart of PVA-based resin (III).

Best Mode for Carrying Out the Invention

A description of the constituent elements described below is one example (a representative example) of embodiments of the invention, and the invention should not be specified to these contents.

The invention will be described in detail below.

The PVA-based resin of the invention is one having a carboxyl group-containing long-chain alkyl group on a side chain, and more particularly, it is a PVA-based resin comprising a structural unit represented by the following

general formula (1):

[KA 2]

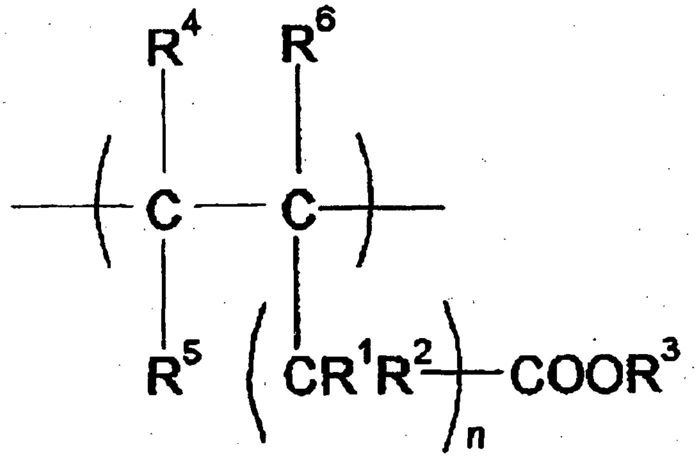

(1)

In the above-mentioned general formula (I), $R^1$, $R^2$, $R^4$, $R^5$ and $R^6$ each independently represents a hydrogen atom or an alkyl group. It is most preferred that all are a hydrogen atom, but a part thereof may be an alkyl group. Although the alkyl group is not particularly limited, an alkyl group having 1 to 8 carbon atoms such as a methyl group, an ethyl group, an n-propyl group, an isopropyl group, an n-butyl group, an isobutyl group, a tert-butyl group and an octyl group is preferred. Such an alkyl group may have a substituent group such as a halogen group, a hydroxyl group, an ester group, a carboxylic acid group or a sulfonic acid group, as needed.

Further, $R^3$ represents a hydrogen atom, an alkyl group or an alkali metal, and usually, most thereof are converted to a hydrogen atom by going through a saponification step during a production process. However, a part thereof may remain as an alkyl ester, or may become an alkali metal salt caused by an alkali metal hydroxide used as a saponification catalyst. Although such an alkyl group is not particularly limited, for example, a methyl group, an ethyl group, an n-propyl group, an isopropyl group, an n-butyl group, an isobutyl group, a tert-butyl group, an octyl group, a behenyl group or the like is preferred. As the alkali metal, sodium or potassium is preferred.

Further, n represents a positive integerfrom 4 to 15. The PVA-based resin of the invention is most **characterized in that** the carboxyl group is bonded to a main chain through the long-chain alkyl group, and the long-chain alkyl group is required to be long to some extent. Accordingly, when such n is too small, it becomes difficult to obtain the advantages of the invention. This is therefore unfavorable. On the other hand, when n is too large, hydrophobicity increases to cause a decrease in water solubility in some cases. This is therefore unfavorable.

Further, a content of the structural unit represented by the general formula (1) in the PVA-based resin of the invention is preferred to be from 0.1 to 20 mol%, further from 0.5 to 10 mol% and particularly from 1 to 5 mol%. When such a content is too small or too large, the advantages of the invention are not obtained in some cases. This is therefore unfavorable. Incidentally, parts other than the structural unit represented by the general formula (1) of the PVA-based resin of the invention are largely a vinyl alcohol structural unit, similarly to an ordinary PVA-based resin, and a vinyl acetate structural unit partially remains depending on the degree of saponification thereof

In obtaining such a PVA-based resin, a method of saponifying a copolymer of a vinyl ester-based monomer and a compound represented by the following general formula (2) is preferably used, although not particularly limited.

[KA 3]

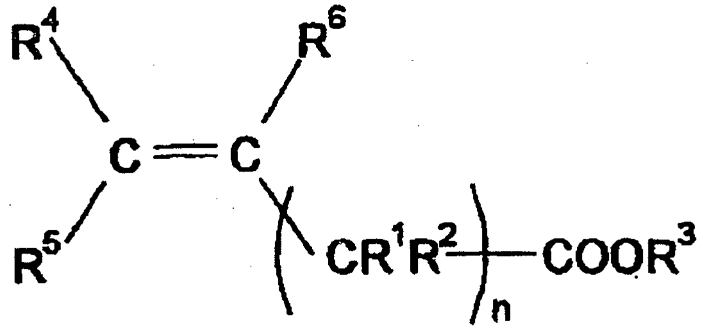

(2)

In the above-mentioned general formula (2), $R^1$, $R^2$, $R^4$, $R^5$, $R^6$ and n are the same as in the above-mentioned general formula (1).

The compounds represented by the general formula (2) include undecylenic acid, oleic acid, elaidic acid, erucic acid and the like, and derivatives thereof such as an ester and a salt. Above all, an alkenoic acid with a terminal double bond, wherein $R^1$, $R^2$, $R^4$, $R^5$ and $R^6$ are hydrogen, is preferred in terms of its easy availability and good copolymerizability, and particularly, undecylenic acid wherein $R^3$ is hydrogen and n is 8 and a derivative thereof are preferred.

The vinyl ester-based monomers include vinyl formate, vinyl acetate, vinyl propionate, vinyl valerate, vinyl butyrate, vinyl isobutyrate, vinyl pivalate, vinyl caprate, vinyl laurate, vinyl stearate, vinyl benzoate, vinyl versatate and the like. Above all, vinyl acetate is preferably used from an economical point of view.

Further, in the invention, besides the above-mentioned copolymerization components, it is also possible to copolymerize other monomer in an amount of about 0.1 to 20 mol% within the range not impairing the object of the invention. Examples thereof include α-olefins such as ethylene, propylene isobutylene, norbornene, α-octene, α-dodecene and α-octadecene, unsaturated acids such as acrylic acid, methacrylic acid, crotonic acid, maleic acid, maleic anhydride and itaconic acid, salts or mono or dialkyl esters thereof, nitriles such as acrylonitrile and methacrylonitrile, amides such as diacetoneacrylamide, acrylamide and methacrylamide, olefinsulfonic acids such as ethylenesulfonic acid, allylsulfonic acid and methallylsulfonic acid or salts thereof, alkyl vinyl ethers, dimethylallyl vinyl ketone, N-vinylpyrrolidone, vinyl chloride, vinylidene chloride, polyoxyalkylene (meth)allyl ethers such as polyoxyethylene (meth)allyl ether and polyoxypropylene (meth)allyl ether, polyoxyalkylene (meth)acrylates such as polyoxyethylene (meth)acrylate and polyoxypropylene (meth)acrylate, polyoxyalkylene (meth)acrylamides such as polyoxyethylene (meth) acrylamide and polyoxypropylene (meth)acrylamide, polyoxyethylene(1-(meth)acrylamide-1,1-dimethylpropyl)ester, polyoxyethylene vinyl ether, polyoxypropylene vinyl ether, polyoxyethylene allylamine, polyoxypropylene allylamine, polyoxyethylene vinylamine, polyoxypropylene vinylamine and the like.

Further, the monomers also include cationic group-containing monomers such as N-acrylamidomethyltrimethylammonium chloride, N-acrylamidoethyltrimethylammonium chloride, N-acrylamidopropyltrimethylammonium chloride, 2-acryloxy-ethyltrimethylammonium chloride, 2-methacryloxyethyltri-methylammonium chloride, 2-hydroxy-3-methacryloyloxy-propyltrimethylammonium chloride, allyltrimethylammonium chloride, methallyltrimethylammonium chloride, 3-butenetrimethylammonium chloride, dimethyldiallylammonium chloride and diethyldiallylammonium chloride, acetoacetyl group-containing monomers, 3,4-diacetoxy-1-butene, 1,4-diacetoxy-2-butene, vinylethylene carbonate, glycerin monoallyl ether,- isopropenyl acetate, 1-methoxyvinyl acetate and the like.

Above all, an α-olefin-vinyl alcohol copolymer obtained using an α-olefins such as ethylene, propylene isobutylene, α-octene, α-dodecene or α-octadecene as a copolymerization component is preferred in terms of improvement in emulsifying capacity and viscosity stability of an aqueous solution, and a content of such an α-olefin is preferably from 0.1 to 20 mol% (further from 2 to 10 mol%).

There is no particular limitation on a method for copolymerizing the above-mentioned vinyl ester-based monomer and the compound represented by the general formula (2) (further, the other monomer), and known methods such as bulk polymerization, solution polymerization, suspension polymerization, dispersion polymerization or emulsion polymerization can be employed. However, usually, solution polymerization is performed.

An adding method of the monomer components at the time of copolymerization is not particularly limited, and an arbitrary method such as adding all at once, adding divisionally or adding continuously is employed.

Solvents used in such copolymerization usually include lower alcohols such as methanol, ethanol, isopropyl alcohol, n-propanol and butanol, ketones such as acetone and methyl ethyl ketone, and the like. Industrially, methanol or isopropyl alcohol is suitably used.

An amount of the solvent to be used may be appropriately selected considering a chain transfer constant of the solvent

in accordance with the degree of polymerization of the desired copolymer. For example, when the solvent is methanol, it is selected from the range of S (solvent)/M (monomer) = 0.01 to 10 (weight ratio), preferably about 0.05 to 3 (weight ratio).

A polymerization catalyst is used in the copolymerization, and such polymerization catalysts include, for example, known radical polymerization catalysts such as azobisisobutyronitrile, acetyl peroxide, benzoyl peroxide and lauryl peroxide, low-temperature active radical polymerization catalysts such as azobisdimethylvaleronitrile, azobismethoxydimethylvaleronitrile and t-butyl peroxyneodecanoate, and the like. Although an amount of the polymerization catalyst to be used varies depending on the kind of catalyst and can not be indiscriminately determined, it is arbitrarily selected depending on the polymerization rate. For example, when azoisobutylonitrile or acetyl peroxide is used, it is preferably from 0.01 to 0.2 mol%, and particularly preferably from 0.02 to 0.15 mol%, based on the vinyl ester-based monomer. Further, for a reaction temperature of the copolymerization reaction, the reaction is conducted at about 30°C to a boiling point depending on the catalyst and pressure to be used, and more particularly, conducted in the range of 35 to 150°C, preferably 40 to 75°C.

In the invention, a copolymerization ratio of the compound represented by the general formula (2) is not particularly limited, and the copolymerization ratio may be determined in accordance with the introduced amount of carboxyl group-containing long-chain alkyl groups described later.

The resulting copolymer is then saponified. In such saponification, the copolymer obtained above is dissolved in an alcohol or a hydrous alcohol, and it is performed using an alkali catalyst or an acid catalyst. The alcohols include methanol, ethanol, propanol, tert-butanol and the like, and methanol is particularly preferably used. Although a concentration of the copolymer in the alcohol is appropriately selected depending on the viscosity of a system, it is usually selected from the range of 10 to 60% by weight. The catalysts to be used in the saponification include alkali catalysts such as hydroxides and alcoholates of alkali metals such as sodium hydroxide, potassium hydroxide, sodium methylate, sodium ethylate, potassium methylate and lithium methylate, and acid catalysts such as sulfuric acid, hydrochloric acid, nitric acid, methasulfonic acid, zeolite and a cation-exchange resin.

The amount of such a saponification catalyst used is appropriately selected according to the saponification method, the desired degree of saponification and the like. When the alkali catalyst is used, a ratio of 0.1 to 30 mmol, preferably 2 to 15 mmol, based on 1 mol of the total amount of the vinyl ester-based monomer and the compound represented by the general formula (2) is suitable.

Further, although the reaction temperature of the saponification reaction is not particularly limited, it is preferred to be from 10 to 60°C (particularly from 20 to 50°C).

Although a content of the carboxyl group-containing long-chain alkyl group present on a side chain of the PVA-based resin thus obtained is not particularly limited, it is preferred to be from 0.1 to 20 mol% (further 0.5 to 15 mol%, particularly from 1 to 10 mol% and more particularly from 1 to 6 mol%). When the content of such a carboxyl group-containing long-chain alkyl group is too small, no advantages are observed in terms of viscosity stability of an aqueous solution and high-speed coatability, reactivity with a crosslinking agent is low, and it is difficult to obtain a phase change by pH. Thus, the effects and advantages of the invention are not sufficiently obtained. Conversely, when it is too much, foaming is remarkable in using the PVA-based resin as an aqueous solution, unfavorably resulting in deterioration of workability in industrial practice. Further, a polymerization rate at the time of copolymerization decreases, or the degree of polymerization of the resulting PVA-based resin decreases. As a result, when it is used as a paper surface sizing agent, sufficient surface paper strength is not obtained, or when it is used as a film or a coating agent, strength and water resistance become insufficient in some cases. This is therefore unfavorable.

An average degree of polymerization (measured based on JIS K6726) of the PVA-based resin of the invention is appropriately selected according to its use purpose, and is not particularly limited. However, it is usually preferred to be from 300 to 4,000 (further from 300 to 2,600 and particularly from 500 to 2,200). When such average degree of polymerization is too small, the strength when formed into a coating unfavorably decreases. Further, when the carboxyl group-containing long-chain alkyl groups are introduced into the PVA-based resin in an amount sufficient to obtain the advantages of the invention, it is difficult to obtain PVA having an average degree of polymerization exceeding 4,000.

Furthermore, the degree of saponification of such a PVA-based resin is 50 mol% or more. When such a degree of saponification is too low, water solubility unfavorably deteriorates.

The thus-obtained PVA-based resin having the carboxyl group-containing long-chain alkyl group on a side chain has characteristics as a polyelectrolyte due to the carboxyl group. Such a carboxyl group is bonded to a main chain through the alkyl group, and intramolecular lactone ring formation is difficult to occur, so that the modification amount smaller than in the carboxyl group-modified PVA described in non-patent document 1 can provide the equivalent or more advantages.

That is to say, such a PVA-based resin is high in dissolution rate in water, also excellent in viscosity stability of an aqueous solution, and also excellent in chelate forming ability with a metal ion by a carboxyl group and reactivity with various crosslinking agents, compared to ordinary unmodified PVA-based resins. Further, the aqueous solution of such a PVA-based resin has good coatability without the occurrence of abnormal flow even under high shear at the time of high-speed coating. Furthermore, it is excellent in solubility in water when formed into a formed article, particularly into

a film. In addition, it has the carboxyl group at the long-chain alkyl group terminal on the side chain, whereby the aqueous solution of such a PVA-based resin turns into a gel by association between hydrophobic groups between the long-chain alkyl groups by making the pH acidic, particularly decreasing the pH to 4 or less. Accordingly, a hydrogel can be easily obtained.
Further, the gel is formed by association between hydrophobic groups, so that it is possible to reversibly control the behavior of gel formation and degelation by changes in pH. In order to allow association between hydrophobic groups to be expressed well, it is preferred that n is 6 or more in the structural unit represented by the general formula (1).

Applications utilizing chelate forming ability of such a PVA-based resin with a metal ion include a paper processing agent (surface sizing agent). This is that when a coating solution comprising such a PVA-based resin is applied onto a paper surface, it efficiently remains on the paper surface by a reaction with aluminum sulfate in paper to show high barrier performance by use in a small amount.
Similarly, such a PVA-based resin also shows good adhesiveness to surfaces of various metals, and utilization examples of its characteristics include an anti-fouling agent. This is that, for example, an aqueous solution of such a PVA-based resin is applied to a can wall of a polymerization can for vinyl chloride and dried to form a coating, thereby making it possible to prevent a fouling from adhering to an inner wall of the can at the time of polymerization of vinyl chloride. Further, in combination with such an anti-fouling agent, it is effective to use a nitrogen-containing polymer compound such as polyethyleneimine, polyvinylpyrrolidone, polyvinylamine or an amine-modified PVA-based resin, an antioxidant such as a polyphenols, a quinone compound, quercetin (a kind of apple- or wine-derived polyphenol), sodium dithionite (an antioxidant) or the like. When the PVA-based resin of the invention is used for use of such an anti-fouling agent, a content of the structural unit having the carboxyl group-containing long-chain alkyl group is preferably 1 mol% or more. When such content is too small, adhesiveness to a metal is unfavorably insufficient in some cases.

Further, such a PVA-based resin aqueous solution is repeatedly subjected to freeze-melt, or the pH of the aqueous solution is made acidic, thereby being able to obtain a hydrogel excellent in adhesiveness, water retention and low-temperature flexibility. In that case, a coexistence of various metal salts in the aqueous solution also makes it possible to obtain a hydrogel compounded with the metal ions, and such a hydrogel is useful as a hydrogel used in an ionic conductive tackifier for a biological electrode for biological investigation, biotherapy, biological diagnosis or the like, or in a hydrous adhesive preparation for a transdermal absorption film agent, cooling therapy or the like.
Such metal salts include calcium nitrate, magnesium nitrate, calcium chloride, strontium chloride, palladium chloride, beryllium chloride magnesium chloride, manganese chloride, nickel chloride and the like rather than monovalent metal salts such as potassium chloride, silver chloride, cesium chloride, sodium chloride and lithium chloride.

Further, applications utilizing a gelling function (gelation occurs at acidity and degelation at alkalinity) by changes in pH of such a PVA-based resin include a separating/recovering agent for an organic compound. This is that the aqueous solution of such a PVA-based resin is allowed to be mixed with the organic compound in a dissolved or dispersed state in water to make the pH of a system acidic, thereby turning the PVA-based resin into the hydrogel and incorporating the organic compound therein. The organic compound-containing hydrogel formed is separated from the aqueous solution by a method such as filtration, which makes it possible to remove and recover such an organic compound.

The organic compounds to which the organic compound-removing agent is directed include organic halogen compounds such as dioxin, trichloroethylene, dichloroethane, dichloromethane, tribromoethylene, dibromoethane, dibromomethane and dioxin, aromatic compounds such as benzene, chlorobenzene, toluene, xylene and parachlorophenol, and the like.

Further, examples utilizing high reactivity of the carboxyl group include a water-resistant film or coating by use in combination with various organic and inorganic crosslinking agents. Such organic crosslinking agents include aldehyde-based compounds (formaldehyde, glyoxal, glutardialdehyde and the like), amino resins (a urea resin, a guanamine resin, a melamine-based resin, methylolmelamine and the like), epoxy-based resins (a water-soluble epoxy resin, polyamidepolyamine epichlorohydrin and the like), amine-based resins (ethylenediamine, hexamethylenediamine, metaxylylenediamine, 1,3-bisaminocyclohexane, polyoxyalkylene type diamine or polyamine and the like), hydrazine compounds, hydrazide compounds (adipic acid dihydrazide, carbodihydrazide, polyhydrazide and the like), acid anhydrides, polyisocyanates, block isocyanates and the like. Further, inorganic crosslinking agents include boric acid, borates (borax and the like), zirconium compounds (chlorohydroxyoxozirconium ("Zircosol ZC-2" manufactured by Daiichi Kigenso Kagaku Co., Ltd.) and zirconyl nitrate ("Zircosol ZN" manufactured by Daiichi Kigenso Kagaku Co., Ltd.)), titanium compounds (tetraalkoxytitanate and the like), aluminum compounds (aluminum sulfate, aluminum chloride, aluminum nitrate and the like), phosphorus compounds (a phosphite ester, bisphenol A-modified polyphosphoric acid and the like), silicone compounds having reactive functional groups such as alkoxy groups or glycidyl groups, and the like. These crosslinking agents may be used either alone or as a combination of two or more thereof. Above all, epoxy-based resins such as a water-soluble epoxy resin and polyamidepolyamine epichlorohydrin are effective, and suitable as a crosslinking agent in using the PVA-based resin of the invention as a protective layer resin for a heat-sensitive recording medium.

Further, the PVA-based resin of the invention is useful as a raw material for water-soluble packaging materials for an agrochemical, a detergent, a cloth for washing, an additive for civil engineering, a disinfectant, a dye, a pigment

and the like. When the PVA-based resin is used for such water-soluble packaging use, the degree of saponification thereof is preferably from 65 to 100 mol%. In particular, when acidic materials or alkaline materials are packaged, the degree of saponification thereof is preferably from 98.1 to 100 mol%, and more preferably from 99 to 100 mol%. This is because when such a degree of saponification is less than 98.1 mol%, there is a fear that water solubility of films deteriorates with time in packaging and storing the acidic materials or the alkaline materials.

Furthermore, the PVA-based resin of the invention can be used for various applications by utilizing its characteristics. Although some of applications have been described above, other specific examples include the following:

(1) Adhesives and Their Related Applications

Adhesives for wood, paper, aluminum foil, plastics and the like, tackifiers, remoistening agents, binders for non-woven fabrics, binders for various building materials such as gypsum boards and fiber boards, binders for granulation of various powders, additives for cement and mortar, hot melt type adhesive force, pressure-sensitive adhesives, anchoring agents for anionic paints, honeymoon adhesives, PVA for aqueous vinylurethane and the like

(2) Formed Articles and Their Related Applications

Fibers, films, pipes, tubes, sheets, sealing films, temporary films, chemical race applications, water-soluble fibers, non-woven fabrics and the like

(3) Covering Agents and Their Related Applications

Clear coating agents for paper, pigment coating agents for paper, sizing agents for paper, overcoat agents for heat-sensitive paper, sizing agents for fiber products, weft sizing agents, fiber processing agents, leather finishing agents, paints, anticlouding agents, metal corrosion inhibitors, brightening agents for galvanization, antistatic agents, electrical conducting agents, ship bottom paints, anti-fouling agent, silica binder applications of ink jet paper and the like

(4) Emulsifiers and Their Related Applications

Emulsifiers for emulsion polymerization of ethylenically unsaturated compounds such as vinyl acetate, butadienic compounds and various acrylic-based monomers, post emulsifiers for hydrophobic resins such as polyolefins and polyester resins, epoxy resins, paraffins, bitumen and the like, emulsifiers for powder emulsions, additives for blocking inhibition at the time of spray drying in the production, and the like

(5) Dispersing Agents and Their Related Applications

Pigment dispersion stabilizers for paints, black writing fluid, water colors, adhesives and the like, dispersion stabilizers for suspension polymerization of various vinyl compound such as vinyl chloride, vinylidene chloride, styrene, (meth)acrylates, vinyl acetate, and the like

(6) Blending Agents for Hydrophobic Resins and Their Related Applications

Antistatic agents and hydrophilicity-imparting agents for hydrophobic resins, additives for composite fibers, films and other formed articles, and the like

(7) Coagulating Agents sand Their Related Applications

Coagulating agents for suspended solids in water and dissolved matter, pulp, water filtering properties of slurries, and the like

(8) Thickeners and Their Related Applications

Thickeners for various aqueous solutions and emulsions, gelling agents and the like

(9) Soil Improvers and Their Related Applications
(10) Photosensitive Agents, Electron-Sensitive Applications, and Photosensitive resist resins and the like
(11) Others such as ion-exchange resins, ion-exchange membranes and their related applications, chelate-exchange resins

Of the above, the usefulness is particularly expected in the applications of (1) to (9).

Examples

The invention will be described with reference to examples below, but the invention is not limited to the description of the examples as long as it does not depart from the gist of the invention.
Incidentally, "parts" and "%" in the examples are on the weight basis, unless otherwise indicated.

Example 1

A reaction can equipped with a reflux condenser, a dropping funnel and a stirrer was added with 1,200 g of vinyl acetate, 60 g of methanol and 102.6 g (4 mol%) of undecylenic acid ($R^1$, $R^2$, $R^4$, $R^5$ and $R^6$ are hydrogen, $R^3$ is hydrogen and n=8), and 0.04 mol% (based on the added vinyl acetate monomer) of azobisisobutyronitrile was put therein. The temperature was elevated with stirring under a nitrogen stream to perform polymerization. Two hours after the initiation of polymerization, 0.04 mol% (based on the initial added vinyl acetate monomer) of azobisisobutyronitrile was further added, followed by continuation of further polymerization. Then, at the time when the ratio of polymerization of vinyl acetate reached 75.2%, a polymerization inhibitor was added thereto to terminate polymerization. Subsequently, unreacted vinyl acetate monomer was removed to an outside of the system by a method of blowing a methanol vapor to obtain a methanol solution of a copolymer.
Then, the solution was diluted with methanol to adjust the concentration to 30%, and added into a kneader. While maintaining the solution temperature at 40°C, a 2% methanol solution of sodium hydroxide was added in an amount of 8 mmol based on 1 mol unit of vinyl acetate in the copolymer to carry out saponification. With a progress of saponification, saponified matter separated out and finally became granular in form. PVA produced was separated by filtration, washed with methanol well and dried in a hot air dryer to obtain a desired substance.
The degree of saponification of the resulting PVA-based resin (I) was analyzed by an alkali consumption required for hydrolysis of residual vinyl acetate units. As a result, it was 99.2 mol%. The degree of polymerization was analyzed according to JIS K 6726. As a result, it was 860. Further, the viscosity of a 4% aqueous solution of the PVA-based resin (I) was measured with a Hoeppler viscometer. As a result, it was 8.94 mPa·s (20°C). The modified amount was calculated by NMR measurement. As a result, it was 3.8 mol%.
The assignment of IR spectrum and $^1$H-NMR spectrum (internal standard substance: tetramethylsilane, solvent: DMSO-d6) of the resulting PVA-based resin (I) was as follows. An IR chart is shown in Fig. 1, and a NMR chart is shown in Fig. 2.
[IR] (see Fig. 1)
3330 $cm^{-1}$: OH (strong)
2940, 2910 $cm^{-1}$: methylene (strong)
1650 $cm^{-1}$: -COOH (medium broad)
1560 $cm^{-1}$: -COO-Na+ (medium)
1430 $cm^{-1}$: methylene (strong)
1240 $cm^{-1}$: methine (weak)
1100 $cm^{-1}$: C-O (medium)
850 $cm^{-1}$: methylene (medium)
670 $cm^{-1}$: OH (medium broad)

[$^1$H-NMR] (see Fig. 2)

1.21 to 1.23 ppm: methylene proton (caused by modified species)
1.35 to 1.58 ppm: methylene proton
1.86 to 1.92 ppm: methylene proton (caused by modified species)
3.81 to 3.85 ppm: methylene proton
4.13 to 4.78 ppm: hydroxyl group
The following evaluations were performed for the resulting PVA-based resin (I). The results are shown in Tables 1 to 5.

[Viscosity Stability of Aqueous Solution]

An 8% aqueous solution of the PVA-based resin was placed in a glass container, and the temperature of the aqueous solution was adjusted to 20°C. Then, the glass container was allowed to stand in a constant temperature water bath of 5°C, and the viscosity after standing for 1 hour and 24 hours was measured. The thickening magnification was

determined, followed by evaluation in the following manner:

A Thickening magnification is less than 2.5 times.
B Thickening magnification is 2.5 times or more.

Incidentally, the thickening magnification is calculated from the following equation:

Thickening magnification = (Viscosity after standing at 5°C for 24 hours)/(Viscosity after standing at 5°C for 1 hour)

[High-Speed Coatability]

An increase in viscosity of a 10% aqueous solution of the PVA-based resin at 30°C under high shear rate was measured, followed by evaluation in the following manner. Incidentally, a flow tester CFT-500C manufactured by Shimadzu Corporation was used as a measuring device.
A Case that shear rate is $6\times10^6$/s or more and increase in viscosity shows a maximum value
B Case that shear rate is less than $6\times10^6$/s and increase in viscosity shows a maximum value

[Water Solubility of Film]

A 10% aqueous solution of the PVA-based resin was flow cast on a hot roll of 60°C to prepare a cast film having a thickness of 30 μm. The film was cut to 40 mm × 40 mm. This was clipped with a slide mount and immersed in water stirred at 20°C. A time (seconds) required for complete dissolution of the film was measured, followed by evaluation according to the following standards:
A Less than 40 seconds
B From 40 to 70 seconds
C 70 seconds or more

[Alkali Resistance of Film]

Sodium carbonate was packed in a bag of 100 mm × 100 mm prepared by heat sealing the above-mentioned film, and after standing under conditions of 40°C × 80%. RH for half a year, a film piece of 40 mm × 40 mm was collected from the bag, and immersed in water stirred at 20°C. A time (seconds) required for complete dissolution of the film was measured, followed by evaluation according to the following standards:

A ··· (Complete dissolution time after packing of sodium carbonate)/(Complete dissolution time before packing) is less than 1.3.

B ··· (Complete dissolution time after packing of sodium carbonate)/(Complete dissolution time before packing) is 1.3 or more and less than 1.5.

C ··· (Complete dissolution time after packing of sodium carbonate)/(Complete dissolution time before packing) is 1.5 or more.

[Separating/Recovering Property of Organic Compound]

Twenty grams of trichloroethylene (ETC) was added into 100 g of a 4% aqueous solution of the PVA-based resin, and after shaking, the pH of the aqueous solution was adjusted to 4.0 or less by using 1 N hydrochloric acid. Then, after a hydrogel formed was separated by filtration with filter paper, a filtrate was allowed to still stand at 60°C for 1 hour. Thereafter, recovery of a separated water/ETC layer was carried out, followed by evaluation according to the following standards:

A ··· ETC amount in filtrate is less than 5 g.
B ··· ETC amount in filtrate is 5 g or more and less than 10 g.
C ··· ETC amount in filtrate is 10 g or more.

[Anti-Fouling Property]

A 4% aqueous solution of the PVA-based resin was spray coated on an inner surface of a stainless steel polymerization tank having an inner volume of 1 liter equipped with a reflux condenser and a jacket, and dried.

This polymerization tank was added with 0.14 g of PVA (degree of saponification: 80 mol%, degree of polymerization: 2,400), 0.08 g of di-2-ethylhexyl peroxycarbonate, 400 g of deionized water and 200 g of vinyl chloride monomer, and with stirring, hot water was allowed to pass through the jacket to elevate the temperature to 57°C, thereby initiating polymerization. When a pressure in the polymerization tank which was about 7.0 kg/$cm^2$G at the time of initiating the polymerization decreased to 6.0 kg/$cm^2$G, an unreacted monomer was recovered, and a polymer slurry was taken out of the system. Fouling after polymerization adhered to a wall of the polymerization tank was scraped with a scraper, and the amount of fouling adhered was measured, followed by evaluation according to the following standards:

A ··· Amount of fouling adhered is less than 10 mg.
B ··· Amount of fouling adhered is 10 mg or more and less than 50 mg.
C ··· Amount of fouling adhered is 50 mg or more.

[Adhesiveness to Metal Surface]

The 4% aqueous solution of the PVA-based resin was adjusted to pH of 4 or pH of 7, and coated onto a metal test plate (SUS 316) so as to a coated amount after dried of 0.53 mg/$cm^2$, followed by air drying overnight under an atmosphere of 23°C and 50% RH. This was immersed in boiled water of pH of 4 or pH of 7 for 1 hour, and then, immersed in a coloring solution of a 0.1 N iodine-potassium iodide aqueous solution. The remaining of a PVA coated film was confirmed by a colored situation.

Incidentally, the coloring solution was prepared by dissolving 25 g of potassium iodide and 12.7 g of iodine in water so as to give a total amount of 1,000 ml and adding boric acid thereto up to a saturated state.
A ··· Coloring is observed on whole surface.
B ··· Coloring is partially observed.
C ··· No coloring is observed.

[Crosslink Water Resistance]

Five parts by weight of polyamideepichlorohydrin was added to and mixed with 2,500 parts by weight of a 4% aqueous solution of the PVA-based resin, followed by flow casting on a PET film. After air drying under an atmosphere of 23°C and 50% RH for 3 days, heat treatment was conducted at 70°C for 5 minutes to obtain a crosslinked PVA-based resin film having a thickness of about 80 μm. Such a film was immersed in boiling water for 1 hour to measure a residual ratio (%) of the film. Incidentally, in the calculation of the residual ratio (%), a dry weight of the film before the immersion in boiling water ($X_1$) and a dry weight of the film after the immersion ($X_2$) (g in both) were determined, and the residual ratio (%) was calculated by the following equation:

$$\text{Eluted ratio (\%)} = (X_2/X_1)\times 100$$

[Paper Surface Sizing Agent Suitability]

The 4% aqueous solution of the PVA-based resin was coated to an acidic paper having a basis weight of 60 g/m$^2$ so as to have a resin solid content of 1.0 g/m$^2$ with a test size press (manufactured by Kumagai Riki Kogyo Co., Ltd., speed: 90 m/min, line pressure: 11 kg/cm), and dried with a cylindrical rotary drier under conditions of 105°C for 2 minutes. Then, both-sides finishing was further performed with a super calender (temperature: 80°C, line pressure: 40 kg/cm) to obtain a coating paper.
For the resulting coating paper, evaluation of a degree of Stockigt size, an air permeability, an oil absorbency and a surface strength was performed in the following manners:
Degree of stockigt size: Measurement was performed based on JIS P-8122.
Air Permeability: Based on JIS P-8117, a test piece was fixed to an Oken type air permeability tester (manufactured by Asahi Seiko Co., Ltd.), and a time (seconds) required for 100 ml of air to pass therethrough was measured.
Oil Absorbency: Based on JIS P-8130, using an oil absorbency tester (manufactured by Kumagai Riki Kogyo Co., Ltd.), a time (seconds) required for oil to be absorbed from a surface of paper to an inside thereof was measured. Surface Paper Strength: Using FINE INK TV-20 (manufactured by Dainippon Ink and Chemicals Inc.) as ink, measurement of IGT pick strength (cm/sec) was performed.

[Use Suitability for Heat-sensitive Materials]

A heat-sensitive recording medium was prepared in the following manner, and evaluation thereof was performed. Preparation of Liquid A: Ten parts of 3-dimethylamino-6-methyl-7-phenylaminofluoran, 25 parts of 3-di(2-methyl-phenoxy)ethane, 5 parts of a 5% aqueous solution of methylcellulose and 50 parts of water were mixed, and pulverized with a sand mill up to an average particle size of 3 μm.
Preparation of Liquid B: Ten parts of 4-hydroxy-4-isopropoxy diphenylsulfone, 5 parts of a 5% aqueous solution of methylcellulose and 25 parts of water were mixed, and pulverized with a sand mill up to an average particle size of 3 μm.
Preparation of Recording Layer: Ninety parts of liquid A, 40 parts of liquid B, 50 parts of a 20% aqueous dispersion of oxidized starch and 10 parts of water were mixed and stirred, and then, coated and dried so as to give a coated amount after drying of 6 g/m$^2$ to obtain a heat-sensitive recording layer.
Preparation of Protective Layer: A coating solution obtained by mixing and stirring 200 parts of a 10% aqueous solution of the PVA-based resin, 70 parts of kaolin, 30 parts of a 30% aqueous dispersion of zinc stearate, 20 parts of a 5% aqueous solution of polyamideepichlorohydrin and 100 parts of water was coated and dried so as to give a coated amount after drying of 4 g/m$^2$ by a roll blade coating method, followed by calender treatment to obtain a heat-sensitive recording medium having a protective layer.
Recording Density: A density of a recorded image obtained by a heat-sensitive simulator (manufactured by Okura Denki Co., Ltd., TH-PMID) was measured with a Macbeth densitometer (manufactured by Macbeth Co., Ltd., RD-100 Type).
Solvent Resistance: A drop of ethanol was dropped on a recorded surface, and the state of bronzing was visually observed.
A: Practically, there is no problem at all.
B: Practically, there is scarcely a problem.
C: Practically, there is somewhat a problem.
D: Practically, there is a problem.
Plasticizer Resistance: A plasticizer-containing vinyl chloride film was wrapped threefold around the heat-sensitive recording medium after recording, followed by standing at 40°C for 72 hours. Then, color fading was visually observed.
A: Practically, there is no problem at all.
B: Practically, there is scarcely a problem.
C: Practically, there is somewhat a problem.
D: Practically, there is a problem.
Printing property: On the protective layer of the heat-sensitive recording medium, 0.4 cc of web offset ink (tackiness: 10) was printed with an RI type tester manufactured by Akira Seisakusho Co., Ltd., and ink settability thereof was visually observed.
A: Practically, there is no problem at all.
B: Practically, there is scarcely a problem.

C: Practically, there is somewhat a problem.
D: Practically, there is a problem.

Example 2

A reaction can equipped with a reflux condenser, a dropping funnel and a stirrer was added with 1,600 g of vinyl acetate, 320 g of methanol and 68.4 g (2 mol%) of undecylenic acid ($R^1$, $R^2$, $R^4$, $R^5$ and $R^6$ are hydrogen, $R^3$ is hydrogen and n=8), and 0.04 mol% (based on the added vinyl acetate monomer) of azobisisobutyronitrile was put therein. The temperature was elevated with stirring under a nitrogen stream to perform polymerization. Two hours after the initiation of polymerization, 0.04 mol% (based on the initial added vinyl acetate monomer) of azobisisobutyronitrile was further added, followed by continuation of further polymerization. Then, at the time when the ratio of polymerization of vinyl acetate reached 73.1%, a polymerization inhibitor was added thereto to terminate polymerization. Subsequently, an unreacted vinyl acetate monomer was removed to an outside of the system by a method of blowing a methanol vapor to obtain a methanol solution of a copolymer.

Then, the solution was diluted with methanol to adjust the concentration to 30%, and added into a kneader. While maintaining the solution temperature at 40°C, a 2% methanol solution of sodium hydroxide was added in an amount of 8 mmol based on 1 mol unit of vinyl acetate in the copolymer to carry out saponification. With a progress of saponification, saponified matter separated out and finally became granular in form. The PVA-based resin produced was separated by filtration, washed with methanol and dried in a hot air dryer to obtain a desired substance.

The degree of saponification of the resulting PVA-based resin (II) was analyzed by an alkali consumption required for hydrolysis of residual vinyl acetate units. As a result, it was 99.6 mol%. The degree of polymerization was analyzed according to JIS K 6726. As a result, it was 1,300. Further, the viscosity of a 40 aqueous solution of the PVA-based resin (II) was measured with a Hoeppler viscometer. As a result, it was 12.4 mPa·s (20°C). The modified amount was calculated by $^1$H-NMR measurement. As a result, it was 2.1 mol%.

For the resulting PVA-based resin (II), the same evaluations as in Example 1 were performed. The results thereof are shown in Tables 1 to 5.

Example 3

A reaction can equipped with a reflux condenser, a dropping funnel and a stirrer was added with 1,600 g of vinyl acetate, 320 g of methanol and 45.8 g (0.5 mol%) of behenyl undecylenate ($R^1$,$R^2$, $R^4$, $R^5$ and $R^6$ are hydrogen, $R^3$ is a behenyl group ($-C_{22}H_{45}$) and n=8), and 0.06 mol% (based on the added vinyl acetate monomer) of azobisisobutyronitrile was added thereto. The temperature was elevated with stirring under a nitrogen stream to perform polymerization. At the time when the degree of polymerization of vinyl acetate reached 81.2%, the polymerization was terminated, and subsequently, an unreacted vinyl acetate monomer was removed to the outside of the system by a method of blowing a methanol vapor to obtain a methanol solution of a copolymer.

Then, the solution was diluted with methanol to adjust the concentration to 30%, and added into a kneader. While maintaining the solution temperature at 40°C, a 2% methanol solution of sodium hydroxide was added in an amount of 9 mmol based on 1 mol unit of vinyl acetate in the copolymer to carry out saponification. With a progress of saponification, saponified matter separated out and finally became granular in form.
The PVA-based resin produced was separated by filtration, washed with methanol and dried in a hot air dryer to obtain a desired substance.

The degree of saponification of the resulting PVA-based resin (III) was analyzed by an alkali consumption required for hydrolysis of residual vinyl acetate units. As a result, it was 99.4 mol%. The degree of polymerization was analyzed according to JIS K 6726. As a result, it was 2,100. Further, the viscosity of a 4% aqueous solution of the PVA-based resin was measured with a Hoeppler viscometer. As a result, it was 46.5 mPa·s (20°C). The modified amount was calculated by $^1$H-NMR measurement. As a result, it was 0.3 mol%.

The assignment of IR spectrum and $^1$H-NMR spectrum (internal standard substance: tetramethylsilane, solvent: DMSO-d6) of the resulting PVA-based resin (III) was as follows:

[IR] (see Fig. 3)
3330 $cm^{-1}$: OH (strong)
2940, 2910 $cm^{-1}$: methylene (strong)
1720 $cm^{-1}$: -COO-R
1650 $cm^{-1}$: -COOH (medium broad)
1560 $cm^{-1}$: -COO-Na+ (medium)
1430 $cm^{-1}$: methylene (strong)
1240 $cm^{-1}$: methine (weak)
1100 $cm^{-1}$: C-O (medium)

850 $cm^{-1}$: methylene (medium)
670 $cm^{-1}$: OH (medium broad)

[$^1$H-NMR] (see Fig. 4)

1.21 to 1.23 ppm: methylene proton (caused by modified species)
1.35 to 1.58 ppm: methylene proton
1.86 to 1.92 ppm: methylene proton (caused by modified species)
3.81 to 3.85 ppm: methylene proton
4.13 to 4.78 ppm: hydroxyl group

For the resulting PVA-based resin (III), the same evaluations as in Example 1 were performed. The results thereof are shown in Tables 1 to 5.

Example 4

A reaction can equipped with a reflux condenser, a dropping funnel and a stirrer was added with 1,800 g of vinyl acetate, 1,260 g of methanol and 8.28 g (0.2 mol%) of methyl undecylenate ($R^1$, $R^2$, $R^4$, $R^5$ and $R^6$ are hydrogen, $R^3$ is a methyl group and n=8), and 0.06 mol% (based on the added vinyl acetate monomer) of azobisisobutyronitrile was put therein. The temperature was elevated with stirring under a nitrogen stream to perform polymerization. At the time when the degree of polymerization of vinyl acetate reached 80.1%, the polymerization was terminated, and subsequently, an unreacted vinyl acetate monomer was removed to the outside of the system by a method of blowing a methanol vapor to obtain a methanol solution of a copolymer.

Then, the solution was diluted with methanol to adjust the concentration to 30%, and added into a kneader. While maintaining the solution temperature at 40°C, a 2% methanol solution of sodium hydroxide was added in an amount of 9 mmol based on 1 mol unit of vinyl acetate in the copolymer to carry out saponification. With a progress of saponification, saponified matter separated out and finally became granular in form.
The PVA-based resin (IV) produced was separated by filtration, washed with methanol well and dried in a hot air dryer to obtain a desired substance.

The degree of saponification of the resulting PVA-based resin (IV) was analyzed by an alkali consumption required for hydrolysis of residual vinyl acetate units. As a result, it was 99.4 mol%. The degree of polymerization was analyzed according to JIS K 6726. As a result, it was 1,000. Further, the viscosity of a 4% aqueous solution of the PVA-based resin was measured with a Hoeppler viscometer. As a result, it was 11.0 mPa·s (20°C). The modified amount was calculated by NMR measurement. As a result, it was 0.21 mol%.

The assignment of IR spectrum and $^1$H-NMR spectrum (internal standard substance: tetramethylsilane, solvent: DMSO-d6) of the resulting PVA-based resin (IV) was as follows:

[IR] The same spectrum as Fig. 3 in Example 3 was obtained. [$^1$H-NMR] The same spectrum as Fig. 4 in Example 3 was obtained.

For the resulting PVA-based resin (IV), the same evaluations as in Example 1 were performed. The results thereof are shown in Tables 1 to 5.

Comparative Example 1

A PVA-based resin (V) was obtained in the same manner as in Example 1 with the exception that only vinyl acetate was polymerized (S/M=0.5, S: methanol, M: vinyl acetate) without adding undecylenic acid, followed by saponification.

The degree of saponification of the resulting PVA-based resin (V) was analyzed by an alkali consumption required for hydrolysis of residual vinyl acetate units. As a result, it was 99.5 mol%. The degree of polymerization was analyzed according to JIS K 6726. As a result, it was 1,100. Further, the viscosity of a 4% aqueous solution of the PVA-based resin (V) was measured with a Hoeppler viscometer. As a result, it was 13.1 mPa·s (20°C).

For the resulting PVA-based resin (V), the same evaluations as in Example 1 were performed. The results thereof are shown in Tables 1 to 5.

Comparative Example 2

A PVA-based resin (VI) was obtained in the same manner as in Example 1 with the exception that monomethyl maleate (2 mol%) was added in place of undecylenic acid, followed by polymerization (S/M=0.5, S: methanol, M: vinyl acetate) and saponification.

The degree of saponification of the resulting PVA-based resin (VI) was 99.2 mol%, and the degree of polymerization was 1,100. Further, the viscosity of a 4% aqueous solution of the PVA-based resin (VI) was measured with a Hoeppler viscometer. As a result, it was 13.0 mPa·s (20°C). The modified amount was calculated by NMR measurement. As a result, it was 2 mol%.

For the resulting PVA-based resin (VI), the same evaluations as in Example 1 were performed. The results thereof are shown in Tables 1 to 5.

[Table 1]

| | Viscosity Stability of Aqueous Solution | High-Speed Coatability | Water Solubility of Film | Alkali Resistance of Film |
|---|---|---|---|---|
| Example 1 | A | A | A | A |
| Example 2 | A | A | A | A |
| Example 3 | A | A | A | A |
| Example 4 | A | A | A | A |
| Comparative Example 1 | B | B | Only swelled | Only swelled |
| Comparative Example 2 | A | A | A | A |

[Table 2]

| | Separating/Recovering Property of Organic Compound | Anti-fouling Property | Crosslink Water Resistance |
|---|---|---|---|
| Example 1 | A | A | A |
| Example 2 | A | A | A |
| Example 3 | B | B | B |
| Example 4 | B | B | B |
| Comparative Example 1 | C | C | D |
| Comparative Example 2 | C | C | D |

[Table 3]

| Adhesiveness to Metal Plate | | | | |
|---|---|---|---|---|
| PVA Aqueous Solution | pH 4 | pH 4 | pH 7 | pH 7 |
| Test Solution | pH 4 | pH 7 | pH 4 | pH 7 |
| Example 1 | A | A | A | A |
| Example 2 | A | A | A | B |
| Comparative Example 1 | C | C | C | C |
| Comparative Example 2 | C | C | C | C |

[Table 4]

| | Degree of Stockigt Size (sec) | Air Permeability (sec) | Oil Absorbency (sec) | IGT Pick Strength (cm/sec) |
|---|---|---|---|---|
| Example 1 | 40 | 1200 | 800 | 190 |
| Example 2 | 32 | 1000 | 720 | 170 |
| Example 3 | 34 | 1300 | 850 | 200 |
| Example 4 | 30 | 850 | 550 | 180 |
| Comparative Example 1 | 12 | 30 | 30 | 130 |
| Comparative Example 2 | 20 | 40 | 30 | 155 |

[Table 5]

| | Recording Density | Solvent Resistance | Plasticizer Resistance | Printing Property |
|---|---|---|---|---|
| Example 1 | 1.45 | A | A | A |
| Example 2 | 1.41 | A | A | A |
| Example 3 | 1.33 | B | B | B |
| Example 4 | 1.33 | B | B | B |
| Comparative Example 1 | 1.27 | D | D | D |
| Comparative Example 2 | 1.40 | C | C | D |

Example 5

A PVA-based resin (VII) (degree of saponification: 88 mol%, degree of polymerization: 860, modified amount: 3.8 mol%) was obtained in the same manner as in Example 1 with the exception that the added amount of sodium hydroxide used in the saponification was 5 mmol based on 1 mol unit of vinyl acetate in the copolymer.

Such a PVA-based resin (VII) was made into a 4% aqueous solution, and the transparency thereof was determined as a light transmittance (%) of 430 nm at 25°C, using a spectrophotometer (manufactured by Nippon Bunko Co., Ltd., an ultraviolet-visible spectrophotometer V-560). Further, such a PVA-based resin (VII) was heat treated in a hot air dryer of 105°C for 4 hours, and the transparency of a 4% aqueous solution was similarly measured to determine a retention of transparency before and after the heat treatment. As a result, it was 95%.

Usually, in carboxyl group-modified PVA, when the degree of saponification decreases, a carboxyl group and an acetic acid group are reacted and crosslinked by heat treatment, thereby water-insoluble matter is formed. Accordingly, the transparency of the aqueous solution deteriorates. However, it is apparent that the formation of the water-insoluble matter by the heat treatment is inhibited in the PVA-based resin of the invention.

Example 6

A PVA-based resin (VIII) (degree of saponification: 80 mol%, degree of polymerization: 1,300, modified amount: 2.1 mol%) was obtained in the same manner as in Example 2 with the exception that the added amount of sodium hydroxide used in the saponification was 3 mmol based on 1 mol unit of vinyl acetate in the copolymer.

For such a PVA-based resin (VIII), the retention of transparency of the aqueous solution before and after the heat treatment was determined in the same manner as in Example 5. As a result, it was 93 %.

Comparative Example 3

A PVA-based resin (IX) (degree of saponification: 88 mol%, degree of polymerization: 1,100, modified amount: 2 mol%) was obtained in the same manner as in Comparative Example 2 with the exception that the added amount of

sodium hydroxide used in the saponification was 5 mmol based on 1 mol unit of vinyl acetate in the copolymer.

Such a PVA-based resin (IX) was evaluated in the same manner as in Example 5. As a result, the retention of transparency of the aqueous solution before and after the heat treatment was 72%. This is because the solubility in water 'decreases by the heat treatment, compared to the PVA-based resin of the invention.

While the invention has been described in details and with reference to specific embodiments thereof, it will be obvious to one skilled in the art that various changes and modifications may be made without departing from the spirit and scope of the invention.

The present application is based on Japanese Patent Application No. 2004-348630 filed on December 1, 2004, and the contents are incorporated herein by reference.

Industrial Applicability

The PVA-based resin of the invention is excellent in viscosity stability of an aqueous solution and high-speed coatability, and excellent in chelating ability with a metal ion and reactivity with various crosslinking agents, so that it is effective for applications such as a paper processing agent, a water-resistant coating agent, an adhesive, packaging water-soluble films for various articles, a separating/recovering agent for various organic compounds, an adhesive, an emulsifier, a suspending material and a fiber processing agent.

## Claims

1. A polyvinyl alcohol-based resin comprising a structural unit having a carboxyl group-containing long-chain alkyl group on a side chain, which is represented by the general formula (1):

[KA 1]

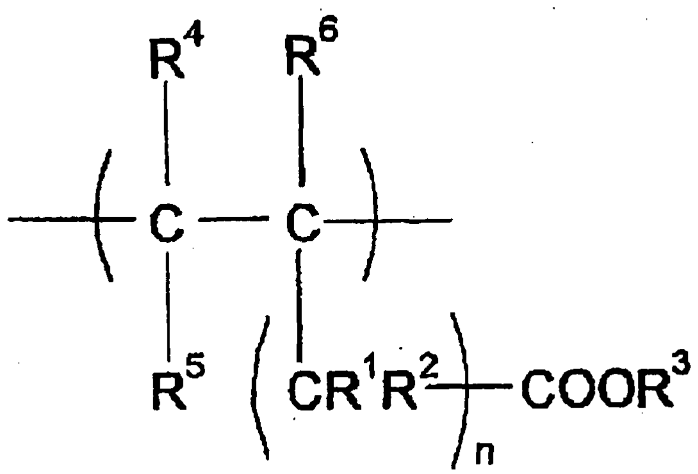

(1)

wherein $R^1$ and $R^2$ each independently represents a hydrogen atom or an alkyl group, $R^4$, $R^5$ and $R^6$ each independently represents a hydrogen atom or an alkyl group, $R^3$ represents a hydrogen atom, an alkyl group or an alkali metal, and n represents a positive integer from 4 to 15,
wherein said polyvinyl alcohol-based resin further comprises a vinyl alcohol structural unit and a vinyl acetate structural unit depending on the degree of saponification, wherein the degree of saponification of the polyvinyl alcohol-based resin is 50 mol% ore more.

2. The polyvinyl alcohol-based resin according to claim 1, wherein $R^1$, $R^2$, $R^4$,$R^5$ and $R^6$ are all a hydrogen atom in the general formula (1).

3. The polyvinyl alcohol-based resin according to claim 1 or 2, wherein $R^3$ is a hydrogen atom in the general formula (1).

4. The polyvinyl alcohol-based resin according to any one of claims 1 to 3, wherein n is from 6 to 15 in the general formula (1).

**5.** The polyvinyl alcohol-based resin according to any one of claims 1 to 4, wherein a content of the structural unit represented by the general formula (1) is from 0.1 to 20 mol%.

**6.** The polyvinyl alcohol-based resin according to any one of claims 1 to 5, which is obtained by saponifying a copolymer of a vinyl ester-based monomer and an unsaturated monomer having a carboxyl group-containing long-chain alkyl group which is represented by the general formula (2):

[KA 2]

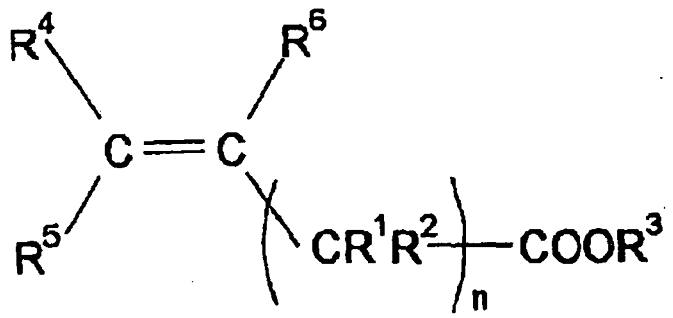

(2)

wherein $R^1$ and $R^2$ each independently represents a hydrogen atom or an alkyl group, $R^4$, $R^5$ and $R^6$ each independently represents a hydrogen atom or an alkyl group, $R^3$ represents a hydrogen atom, an alkyl group or an alkali metal, and n represents a positive integer.

**7.** A paper processing agent using the polyvinyl alcohol-based resin according to any one of claims 1 to 6.

**8.** An adhesive using the polyvinyl alcohol-based resin according to any one of claims 1 to 6.

**9.** A hydrogel using the polyvinyl alcohol-based resin according to any one of claims 1 to 6.

**10.** An organic compound-removing agent using the polyvinyl alcohol-based resin according to any one of claims 1 to 6.

**11.** A formed article using the polyvinyl alcohol-based resin according to any one of claims 1 to 6.

**12.** The formed article according to claim 11, which is a packaging water-soluble film for an article selected from the group consisting of an agrochemical, a detergent, a cloth for washing, an additive for civil engineering, a disinfectant, a dye and a pigment.

**13.** A coating agent using the polyvinyl alcohol-based resin according to any one of claims 1 to 6.

**14.** An anti-fouling agent using the polyvinyl alcohol-based resin according to any one of claims 1 to 6.

**Patentansprüche**

**1.** Polyvinylalkoholbasiertes Harz, das eine strukturelle Einheit umfasst, die eine Carboxylgruppen enthaltende langkettige Alkylgruppe an einer Seitenkette aufweist, und die durch die allgemeine Formel (1) dargestellt wird:

[KA 1]

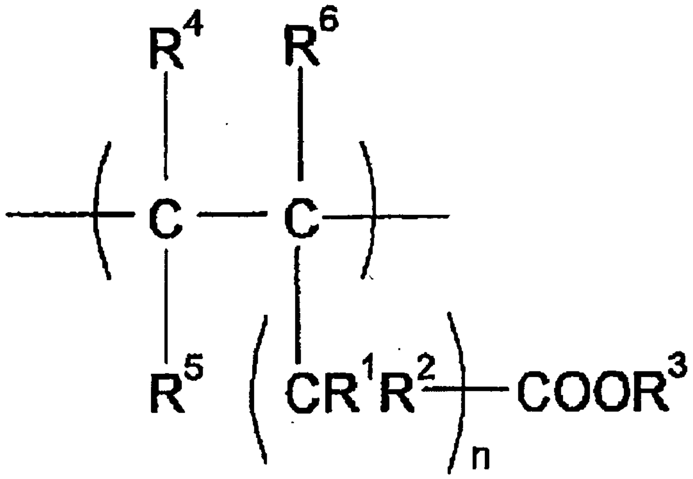

(1)

wobei R1 und R2 jeweils unabhängig für ein Wasserstoffatom oder eine Alkylgruppe stehen, R4, R5 und R6 jeweils unabhängig für ein Wasserstoffatom oder eine Alkylgruppe stehen, R3 für ein Wasserstoffatom, eine Alkylgruppe oder
ein Alkalimetall steht und n für eine positive ganze Zahl von 4 bis 15 steht, wobei das polyvinylalkoholbasierte Harz ferner abhängig vom Verseifungsgrad eine strukturelle Vinyleinheit und eine strukturelle Vinylacetateinheit umfasst, wobei der Verseifungsgrad des polyvinylalkoholbasierten Harzes 50 mol% oder mehr beträgt.

2. Polyvinylalkoholbasiertes Harz nach Anspruch 1, wobei R1, R2, R4, R5 und R6 in der allgemeinen Formel (1) alle ein Wasserstoffatom sind.

3. Polyvinylalkoholbasiertes Harz nach Anspruch 1 oder 2, wobei R3 in der allgemeinen Formel (1) ein Wasserstoffatom ist.

4. Polyvinylalkoholbasiertes Harz nach einem der Ansprüche 1 bis 3, wobei n in der allgemeinen Formel (1) 6 bis 15 ist.

5. Polyvinylalkoholbasiertes Harz nach einem der Ansprüche 1 bis 4, wobei der Gehalt der strukturellen Einheit, die durch die allgemeine Formel (1) dargestellt wird, von 0,1 bis 20 mol% reicht.

6. Polyvinylalkoholbasiertes Harz nach einem der Ansprüche 1 bis 5, das durch Verseifen eines Co-Polymers aus einem vinylesterbasierten Monomer und einem ungesättigten Monomer erhalten wird, das eine Carboxylgruppen enthaltende langkettige Alkylgruppe aufweist, die durch die allgemeine Formel (2) dargestellt wird:

[KA2]

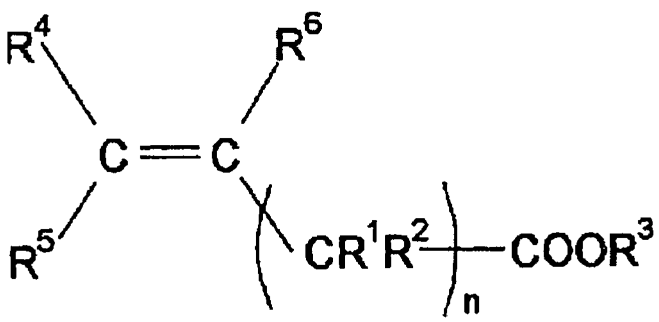

(2)

wobei R1 und R2 jeweils unabhängig für ein Wasserstoffatom oder eine Alkylgruppe stehen, R4, R5 und R6 jeweils

unabhängig für ein Wasserstoffatom oder eine Alkylgruppe stehen, R3 für ein Wasserstoffatom, eine Alkylgruppe oder
ein Alkalimetall steht und n für eine positive ganze Zahl steht.

**7.** Papierverarbeitungsmittel, welches das polyvinylalkoholbasierte Harz nach einem der Ansprüche 1 bis 6 verwendet.

**8.** Haftmittel, welches das polyvinylalkoholbasierte Harz nach einem der Ansprüche 1 bis 6 verwendet.

**9.** Hydrogel, welches das polyvinylalkoholbasierte Harz nach einem der Ansprüche 1 bis 6 verwendet.

**10.** Organische Verbindungen entfernendes Mittel, welches das polyvinylalkoholbasiertes Harz nach einem der Ansprüche 1 bis 6 verwendet.

**11.** Geformter Gegenstand, welcher das polyvinylalkoholbasierte Harz nach einem der Ansprüche 1 bis 6 verwendet.

**12.** Geformter Gegenstand nach Anspruch 11, der ein wasserlöslicher Verpackungsfilm für einen Gegenstand ist, der aus der Gruppe ausgewählt ist, die aus einer Agrarchemikalie, einem Detergenz, einem Tuch zum Waschen, einem Hilfsstoff für die Bauwirtschaft, einem Desinfektionsmittel, einem Farbstoff und einem Pigment besteht.

**13.** Beschichtungsmittel, welches das polyvinylalkoholbasierte Harz nach einem der Ansprüche 1 bis 6 verwendet.

**14.** Ablagerungsverhinderungsmittel, welches das polyvinylalkoholbasierte Harz nach einem der Ansprüche 1 bis 6 verwendet.

**Revendications**

**1.** Résine à base de poly(alcool vinylique) comprenant un motif structurel comprenant un groupe alkyle à chaîne longue contenant un groupe carboxyle sur une chaîne latérale, qui est représenté par la formule générale (1) :

[KA 1]

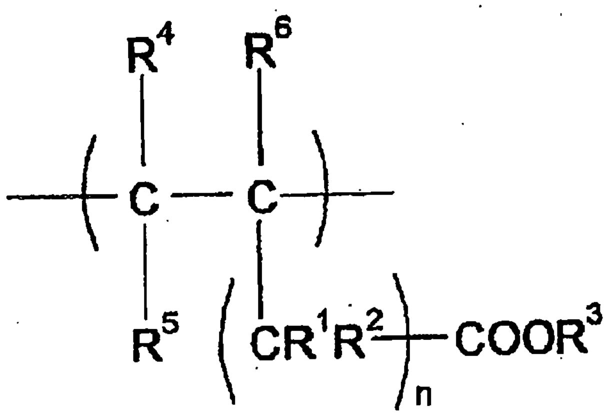

(1)

dans laquelle $R^1$ et $R^2$ représentent chacun indépendamment un atome d'hydrogène ou un groupe alkyle, $R^4$, $R^5$ et $R^6$ représentent chacun indépendamment un atome d'hydrogène ou un groupe alkyle, $R^3$ représente un atome d'hydrogène, un groupe alkyle ou un métal alcalin et n représente un nombre entier positif de 4 à 15, dans laquelle ladite résine à base de poly(alcool vinylique) comprend en outre un motif structurel alcool vinylique et un motif structurel acétate de vinyle en fonction du degré de saponification, dans laquelle le degré de saponification de la résine à base de poly(alcool vinylique) est de 50 % en moles ou plus.

**2.** Résine à base de poly(alcool vinylique) selon la revendication 1, dans laquelle $R^1$, $R^2$, $R^4$, $R^5$ et $R^6$ sont tous des atomes d'hydrogène dans la formule générale (1).

**3.** Résine à base de poly(alcool vinylique) selon la revendication 1 ou 2, dans laquelle $R^3$ est un atome d'hydrogène dans la formule générale (1).

**4.** Résine à base de poly(alcool vinylique) selon l'une quelconque des revendications 1 à 3, dans laquelle n vaut de 6 à 15 dans la formule générale (1).

**5.** Résine à base de poly(alcool vinylique) selon l'une quelconque des revendications 1 à 4, dans laquelle la teneur en motif structurel représenté par la formule générale (1) est de 0,1 à 20 % en moles.

**6.** Résine à base de poly(alcool vinylique) selon l'une quelconque des revendications 1 à 5, qui est obtenue par saponification d'un copolymère d'un monomère à base de vinylester et d'un monomère insaturé comprenant un groupe alkyle à chaîne longue contenant un groupe carboxyle, qui est représenté par la formule générale (2) :

[KA 2]

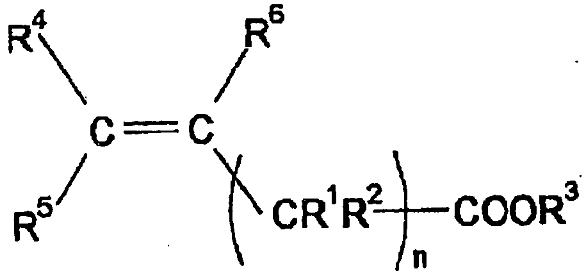

(2)

dans laquelle $R^1$ et $R^2$ représentent chacun indépendamment un atome d'hydrogène ou un groupe alkyle, $R^4$, $R^5$ et $R^6$ représentent chacun indépendamment un atome d'hydrogène ou un groupe alkyle, $R^3$ représente un atome d'hydrogène, un groupe alkyle ou un métal alcalin et n représente un nombre entier positif.

**7.** Agent de traitement du papier utilisant la résine à base de poly(alcool vinylique) selon l'une quelconque des revendications 1 à 6.

**8.** Adhésif utilisant la résine à base de poly(alcool vinylique) selon l'une quelconque des revendications 1 à 6.

**9.** Hydrogel utilisant la résine à base de poly(alcool vinylique) selon l'une quelconque des revendications 1 à 6.

**10.** Agent d'élimination d'un composé organique utilisant la résine à base de poly(alcool vinylique) selon l'une quelconque des revendications 1 à 6.

**11.** Article formé utilisant la résine à base de poly(alcool vinylique) selon l'une quelconque des revendications 1 à 6.

**12.** Article formé selon la revendication 11, qui est un film d'emballage soluble dans l'eau pour un article choisi dans le groupe constitué d'un produit
agrochimique, d'un détergent, d'un linge pour le lavage, d'un additif pour le génie civil, d'un désinfectant, d'un colorant et d'un pigment.

**13.** Agent de revêtement utilisant la résine à base de poly(alcool vinylique) selon l'une quelconque des revendications 1 à 6.

**14.** Agent anti-salissure utilisant la résine à base de poly(alcool vinylique) selon l'une quelconque des revendications 1 à 6.

Fig. 1

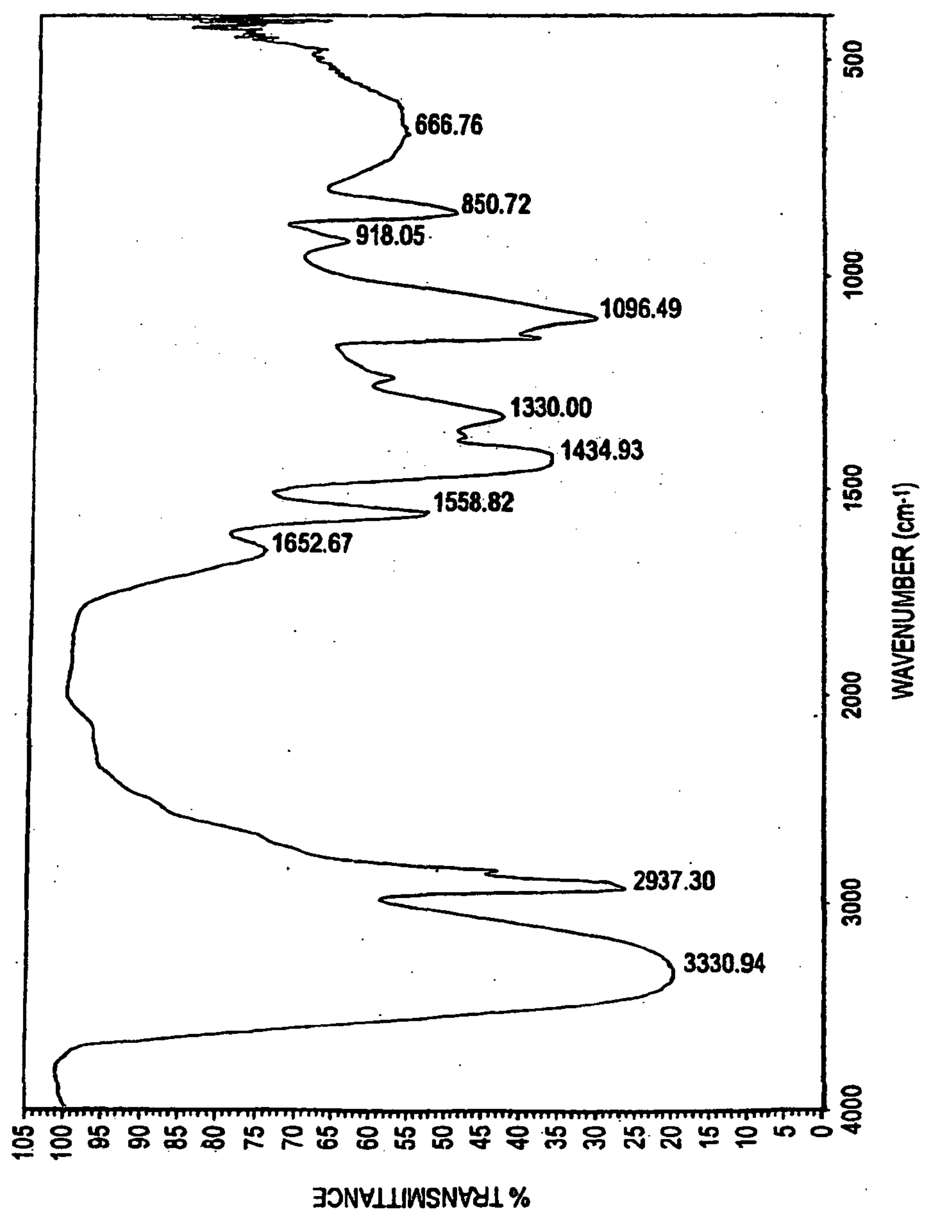
666.76
850.72
918.05
1096.49
1330.00
1434.93
1558.82
1652.67
2937.30
3330.94
WAVENUMBER (cm-1)
% TRANSMITTANCE
500
1000
1500
2000
3000
4000
1.05
100
95
90
85
80
75
70
65
60
55
50
45
40
35
30
25
20
15
10
5
0

Fig.2

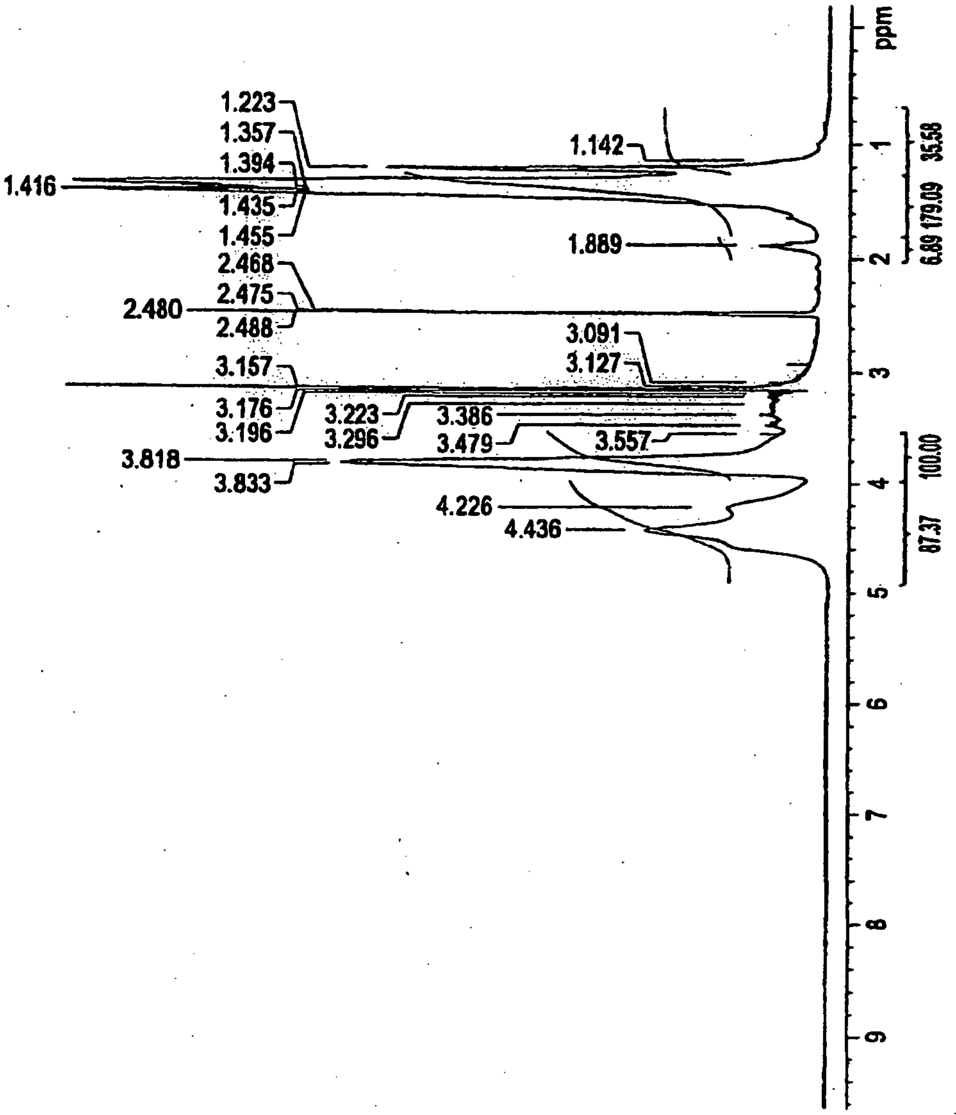

1.223
1.357
1.394
1.416
1.435
1.455
2.468
2.475
2.480
2.488
3.157
3.176
3.196
3.818
3.833
1.142
1.889
3.091
3.127
3.223
3.296
3.386
3.479
3.557
4.226
4.436
ppm
1
2
3
4
5
6
7
8
9
35.58
6.89
179.09
100.00
87.37

Fig. 3

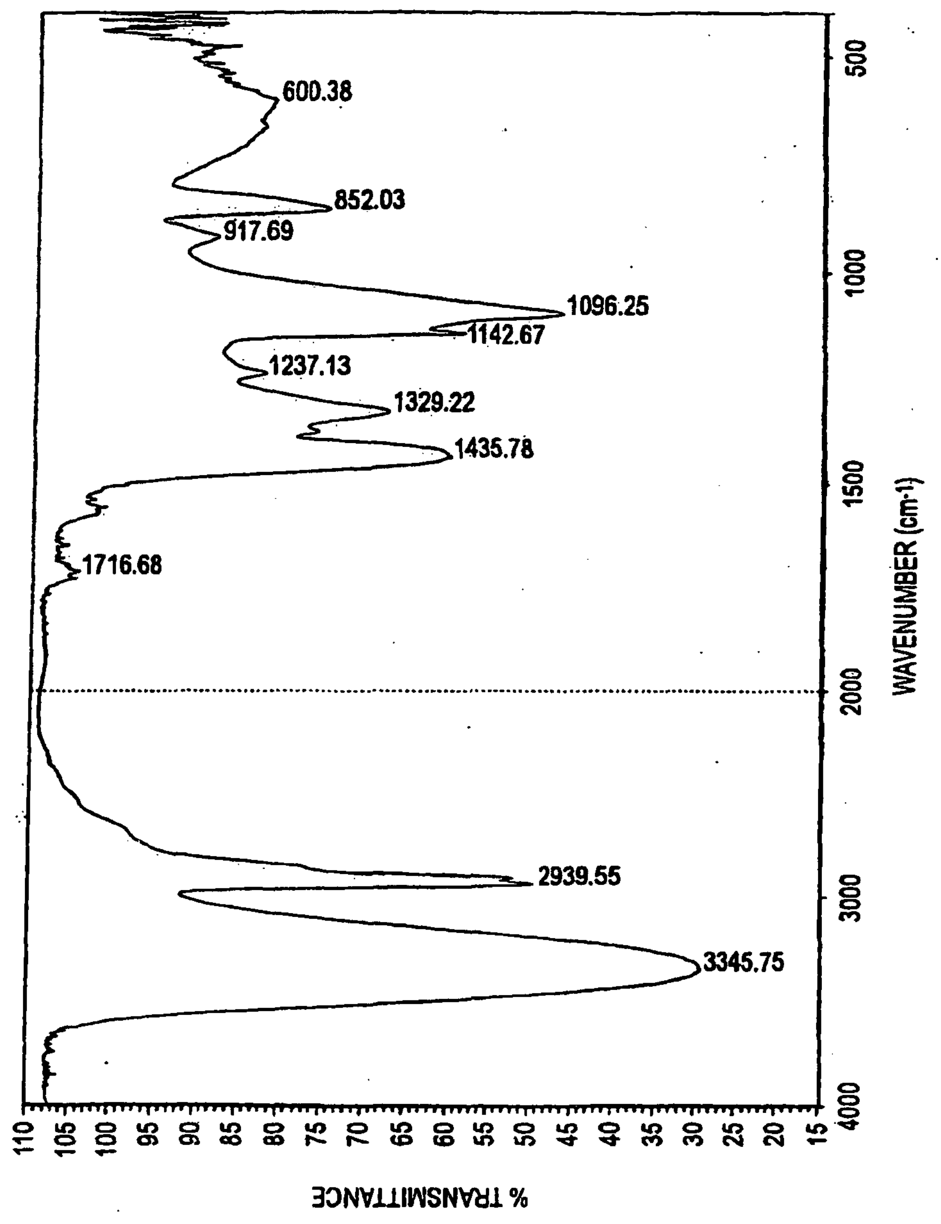
600.38
852.03
917.69
1096.25
1142.67
1237.13
1329.22
1435.78
1716.68
2939.55
3345.75
WAVENUMBER (cm-1)
% TRANSMITTANCE
500
1000
1500
2000
3000
4000
110
105
100
95
90
85
80
75
70
65
60
55
50
45
40
35
30
25
20
15

Fig.4

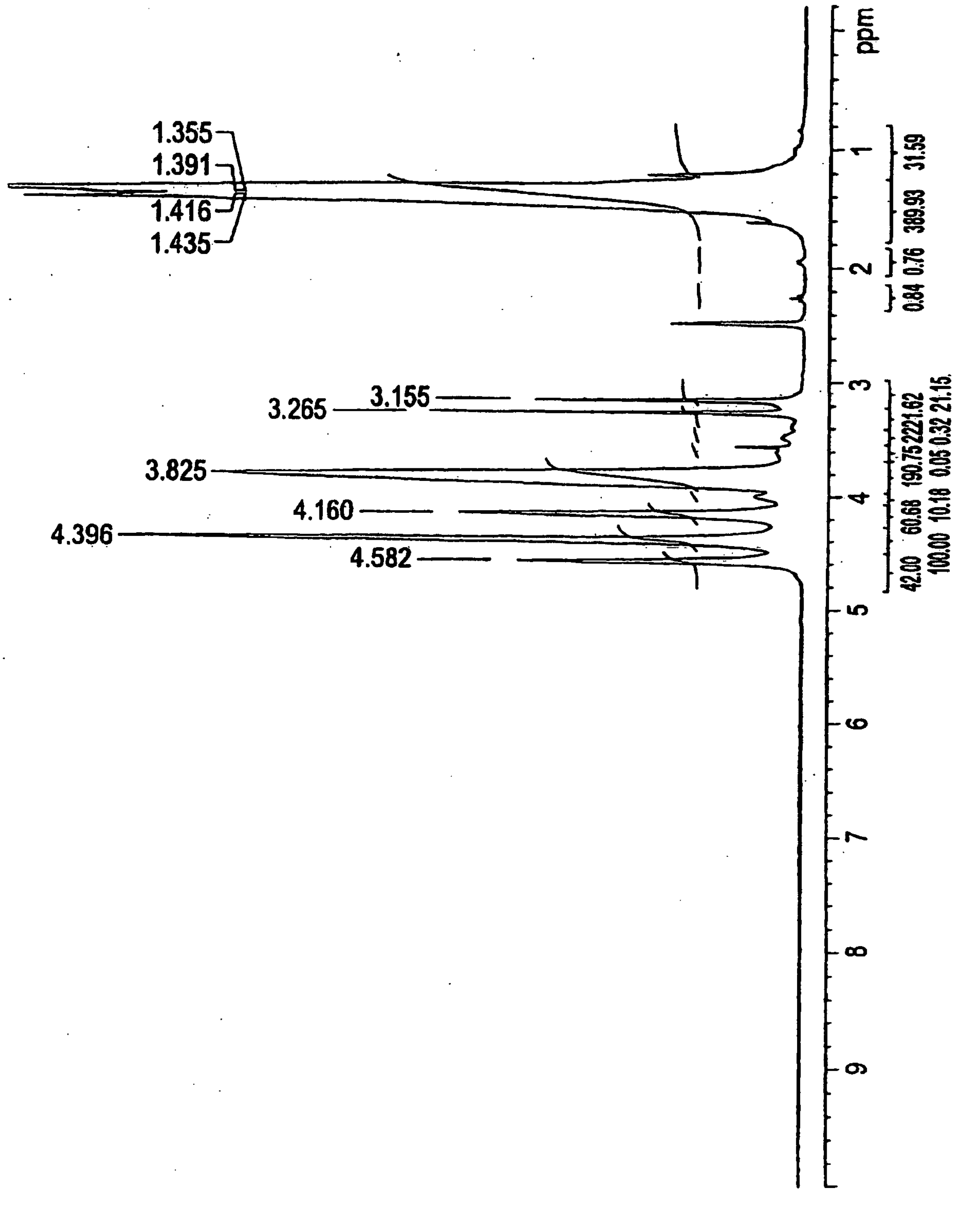
1.355
1.391
1.416
1.435
3.155
3.265
3.825
4.160
4.396
4.582
ppm
1
2
3
4
5
6
7
8
9
31.59
389.93
0.76
0.84
2221.62
190.75
60.68
42.00
21.15
0.32
0.05
10.18
100.00

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5684074 A
- FR 1584053
- EP 0440435 A2
- JP 2004348630 A


### Non-patent literature cited in the description


- POLYVINYL ALCOHOL-DEVELOPMENTS. 1992, 157
- **T. YAMAMOTO et al.** Polymeric Materials Encyclopedia. CRC Press, 1996, vol. 9, 6991 ff
- **MARK et al.** Encyclopedia of Polymer Science and Engineering. John Wiley & Sons, 1989, vol. 17, 181 ff